# EUROPÄISCHE PATENTSCHRIFT

(11) **EP 2 097 346 B1**
(45) Veröffentlichungstag und Bekanntmachung des Hinweises auf die Patenterteilung: **31.03.2010**
(21) Anmeldenummer: 07818131.0
(22) Anmeldetag: 13.09.2007
(51) Int. Cl.: B65H 63/036, B65H 59/38, F16D 65/12

(54) **SPULENBREMSE FÜR EINE SPULVORRICHTUNG EINER KREUZSPULEN HERSTELLENDEN TEXTILMASCHINE**
BOBBIN BRAKE FOR A WINDING APPARATUS OF A TEXTILE MACHINE WHICH PRODUCES CROSSWOUND BOBBINS
FREIN DE BOBINE POUR UN DISPOSITIF DE BOBINAGE D'UNE MACHINE TEXTILE QUI FABRIQUE DES BOBINES CROISÉES

(30) Priorität: 25.10.2006 DE 102006050140
(43) Veröffentlichungstag der Anmeldung: 09.09.2009
(73) Patentinhaber: Oerlikon Textile GmbH & Co. KG, 42897 Remscheid (DE)
(72) Erfinder: LÖWENFOSS, Frank, 41372 Niederkrüchten (DE)
(74) Vertreter: Hamann, Arndt
(86) Internationale Anmeldenummer: PCT/EP2007/007959
(87) Internationale Veröffentlichungsnummer: WO 2008/049487

(56) Entgegenhaltungen:
- DE-A1- 2 313 152
- DE-A1- 19 650 932
- GB-A- 2 132 646
- US-A- 2 950 795
- US-A- 3 525 421

## Beschreibung

Die Erfindung betrifft eine Spulenbremse für eine Spulvorrichtung einer Kreuzspulen herstellenden Textilmaschine gemäß dem Oberbegriff des Anspruchs 1.

Derartige Spulenbremsen sind insbesondere im Zusammenhang mit so genannten Kreuzspulautomaten seit langem bekannt und beispielsweise im Handbuch "AUTOCONER System 238" der Fa. Schlafhorst auf der Seite 1.3.8 oder in der DE 196 50 932 A1 relativ ausführlich beschrieben.

Diese bekannten Spulenbremsen sind an jeder der Arbeitsstellen des Kreuzspulautomaten vorhanden und jeweils in den Spulenrahmen integriert, der während des Spulbetriebes die Kreuzspule bzw. deren Hülse rotierbar haltert.
Die Spulenbremsen verfügen jeweils über einen Pneumatik-Bremszylinder, der über ein Elektromagnetventil, das in eine Pneumatikleitung eingeschaltet und an den Arbeitsstellenrechner angeschlossen ist, definiert mit Druckluft beaufschlagbar ist. Die Spulenbremsen besitzen des Weiteren einen die Hülse der Kreuzspule fixierenden Hülsenaufnahmeteller, der endseitig mit einer Bremsfläche ausgestattet ist, sowie über ein an den Kolben des Bremszylinders angeschlossenes, axial verschiebbar gelagertes Bremsgehäuse, mit einem am Bremsgehäuse festgelegten Bremsbelag.
Bei Druckbeaufschlagung wird der als Lagerbuchse ausgebildete Kolben des Bremszylinders in Richtung der Hülse verlagert und legt dabei den am Bremsgehäuse angeordneten Bremsbelag reibschlüssig an die Bremsfläche des Hülsenaufnahmetellers an. Die im Spulenrahmen rotierende Kreuzspule wird dadurch zügig und zuverlässig in den Stillstand abgebremst.

Spulenbremsen der vorstehend beschriebenen Art haben sich in der Textilindustrie in der Praxis bewährt und sind in großer Stückzahl im Einsatz.
Solche Spulenbremsen stoßen bei modernen Kreuzspulautomaten, die mit sehr hohen Spulgeschwindigkeiten arbeiten, allerdings an ihre Grenzen.
Das heißt, die auf den Arbeitsstellen moderner Kreuzspulautomaten produzierten Spulen rotieren nicht nur mit einer höheren Drehzahl, sondern auch die Kreuzspulen selbst sind im Laufe der Zeit größer und damit auch deutlich schwerer geworden, was zu einer deutlich höheren Beanspruchung der Spulenbremsen führt.
Die hohe Beanspruchung führt nicht nur dazu, dass die Bremszeiten relativ lang werden, was sich negativ auf den Gesamtwirkungsgrad der Textilmaschine auswirkt, sondern auch der Verschleiß an den Spulenbremsen ist verhältnismäßig groß geworden, was die Lebensdauer der Spulenbremsen verringert.

Ausgehend vom vorgenannten Stand der Technik liegt der Erfindung die Aufgabe zugrunde, eine Spulenbremse zu schaffen, die sowohl ein hohes Bremsmoment entwickeln kann, als auch im Dauerbetrieb der Kreuzspulen herstellenden Textilmaschine sehr standfest ist.

Diese Aufgabe wird erfindungsgemäß durch eine Spulenbremse gelöst, die die im Anspruch 1 beschriebenen Merkmale aufweist.

Vorteilhafte Ausgestaltungen der Erfindung sind Gegenstand der Unteransprüche.

Die erfindungsgemäße Spulenbremse mit einem Bremsgehäuse, das zusätzlich zu einem am Bremsgehäuse fest angeordneten Bremsbelag einen mit dem Bremsgehäuse drehfest verbundenen, jedoch axial verschiebbar gelagerten Bremsring aufweist, und bei der zwischen dem Bremsbelag und dem Bremsring eine muffenartige Bremsscheibe installiert ist, die axial verschiebbar in einem rotierbar gelagerten Aufnahmegehäuse des Hülsenaufnahmetellers angeordnet ist, zeichnet sich nicht nur durch ein hohes Bremsmoment aus, sondern ist auch, da das Schwungmoment der Spule beim Bremsen auf mehrere Bremsflächen verteilt wird, recht unempfindlich hinsichtlich Verschleiß.
Das heißt, die erfindungsgemäße Spulenbremse mit ihren drei hintereinander angeordneten Bremspartnern arbeitet nicht nur sehr effektiv, sondern weist auch eine lange Lebensdauer auf.

Wie im Anspruch 2 beschrieben, ist in vorteilhafter Ausführungsform vorgesehen, dass die Bremsscheibe drehfest mit dem rotierbar gelagerten Aufnahmegehäuse des Hülsenaufnahmetellers verbunden und in Bremsstellung der Spulenbremse zwischen dem Bremsbelag des Bremsgehäuses und dem Bremsring geklemmt ist. Durch eine solche Ausbildung ist sichergestellt, dass das über den Bremsbelag sowie den Bremsring auf die Bremsscheibe eingeleitete Bremsmoment direkt und vollständig auf das Aufnahmegehäuse des Hülsenaufnahmetellers und von diesem auf die Kreuzspule übertragen wird.
Das heißt, die im Anspruch 2 beschriebene Ausführungsform gewährleistet, dass die Kreuzspule schnell und sicher in den Stillstand abgebremst wird.

Gemäß Anspruch 3 ist das Aufnahmegehäuse des Hülsenaufnahmetellers topfartig ausgebildet.
Die Innenseite des Aufnahmegehäuses bildet dabei eine nach innen weisende Gleit- und Führungsfläche, an der die muffenartig ausgebildete Bremsscheibe mit einem Führungsansatz axial verschiebbar geführt ist.
In die Gleit- und Führungsfläche ist außerdem eine Ringnut eingearbeitet, die im Montagezustand einen O-Ring aufnimmt, der mit Spannung den Führungsansatz der Bremsscheibe umschließt.

Der O-Ring, der beim Schließen der Spulenbremse durch den Führungsansatz der Bremsscheibe etwas verformt wird, sorgt dafür, dass die Bremsscheibe beim Lüften der Spulenbremse wieder in ihre Ausgangsstellung zurückkehrt, in der die rotierende Bremsscheibe etwas beabstandet zum axial verschiebbar, jedoch rotationsfest angeordneten Bremsring steht.

Wie im Anspruch 4 weiter beschrieben, weist der axial verschiebbar gelagerte Bremsring vorzugsweise eine Außenverzahnung auf, die mit einer entsprechenden Innenverzahnung am Bremsgehäuse korrespondiert.
Durch eine solche formschlüssige Anbindung des Bremsringes an das Bremsgehäuse ist gewährleistet, dass das Trägheitsmoment der Spule während des Abbremsens sicher auf das Bremsgehäuse übertragen und von diesem absorbiert werden kann.

Die Erfindung wird nachfolgend anhand eines in den Zeichnungen dargestellten Ausführungsbeispiels näher erläutert.

Es zeigen:
- Fig.1: in Seitenansicht eine Arbeitsstelle einer Kreuzspulen herstellenden Textilmaschine, mit einer Spulvorrichtung, deren Spulenrahmen mit einer erfindungsgemäßen Spulenbremse ausgestattet ist,
- Fig.2: eine perspektivische Ansicht eines Spulenrahmens, der über eine erfindungsgemäße Spulenbremse verfügt,
- Fig.3: die erfindungsgemäße Spulenbremse im Schnitt,
- Fig.4: eine Draufsicht auf einen axial verschiebbar gelagerten, jedoch drehfest im Bremsgehäuse angeordneten Bremsbelag.

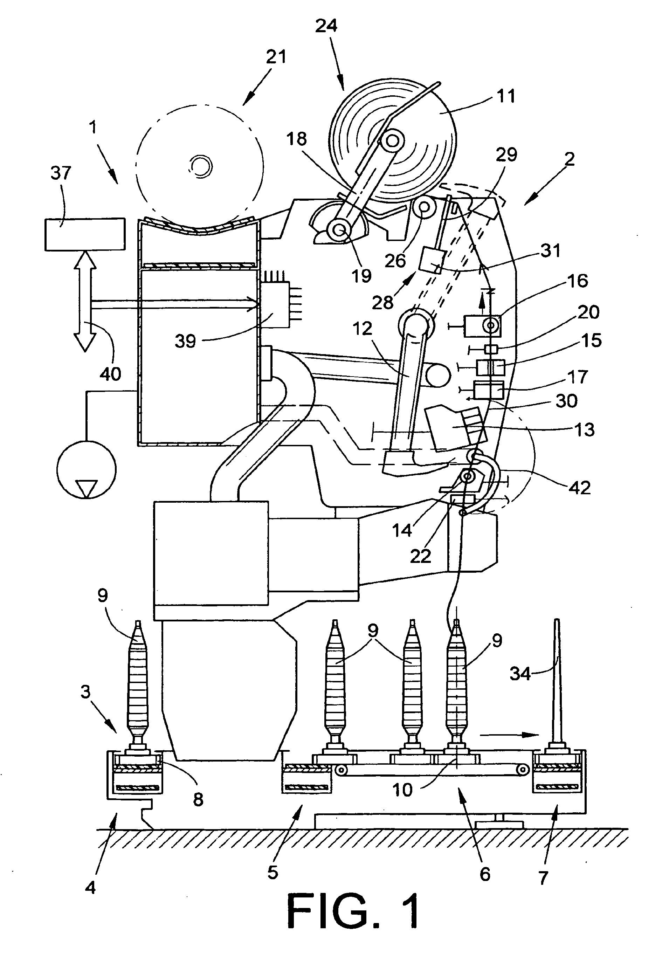

In Figur 1 ist in Seitenansicht schematisch eine insgesamt mit der Bezugszahl 1 gekennzeichnete Kreuzspulen herstellende Textilmaschine, im Ausführungsbeispiel ein Kreuzspulautomat, dargestellt.
Derartige Kreuzspulautomaten weisen üblicherweise zwischen ihren (nicht dargestellten) Endgestellen eine Vielzahl gleichartiger Arbeitsstellen 2, im vorliegenden Fall so genannte Spulstellen, auf.
Auf diesen Spulstellen 2 werden, wie bekannt und daher nicht näher erläutert, die z. B. auf einer Ringspinnmaschine produzierten Spinnkopse 9 zu großvolumigen Kreuzspulen 11 umgespult.
Nach ihrer Fertigstellung werden diese Kreuzspulen 11 dann mittels eines selbsttätig arbeitenden (nicht dargestellten) Serviceaggregates, vorzugsweise eines Kreuzspulenwechslers, auf eine maschinenlange Kreuzspulentransporteinrichtung 21 übergeben und zu einer maschinenendseitig angeordneten Spulenverladestation oder dergleichen transportiert.

Solche Kreuzspulautomaten 1 weisen oft auch eine Logistikeinrichtung in Form eines Spulen- und Hülsentransportsystems 3 auf.
In diesem Spulen- und Hülsentransportsystem 3 laufen, auf Transporttellern 8, die Spinnkopse 9 beziehungsweise Leerhülsen 34 um.

Des weiteren verfügen solche Kreuzspulautomaten 1 jeweils über eine Zentralsteuereinheit 37, die vorzugsweise über einen Maschinenbus 40 mit den separaten Arbeitsstellenrechnern 39 der einzelnen Arbeitsstellen 2 verbunden ist.

Von dem vorstehend erwähnten Spulen- und Hülsentransportsystem 3 ist in Figur 1 lediglich die Kopszuführstrecke 4, die reversierend antreibbare Speicherstrecke 5, eine der zu den Spulstellen 2 führenden Quertransportstrecken 6 sowie die Hülsenrückführstrecke 7 dargestellt.
Wie in Figur 1 weiter angedeutet, werden die angelieferten Spinnkopse 9 in einer Abspulstellung 10, die sich jeweils im Bereich der Quertransportstrecken 6 an den Arbeitsstellen 2 befinden, zu großvolumigen Kreuzspulen 11 umgespult.

Die einzelnen Arbeitsstellen 2 verfügen zu diesem Zweck, wie bekannt und daher nur angedeutet, über verschiedene Einrichtungen, die einen ordnungsgemäßen Spulbetrieb der Arbeitsstellen 2 gewährleisten.
In Figur 1 ist beispielsweise ein vom Spinnkops 9 zur Kreuzspule 11 laufender Faden mit der Bezugszahl 30, eine Saugdüse mit 12 sowie ein Greiferrohr mit 42 bezeichnet.
Solche Arbeitsstellen 2 verfügen in der Regel außerdem über eine Spleißeinrichtung 13, einen Fadenspanner 14, einen Fadenreiniger 15, eine Paraffiniereinrichtung 16, eine Fadenschneideinrichtung 17, einen Fadenzugkraftsensor 20 sowie über einen Unterfadensensor 22.

Die insgesamt mit der Bezugszahl 24 gekennzeichnete Spulvorrichtung weist einen Spulenrahmen 18 auf, der um wenigstens eine Schwenkachse 19 beweglich gelagert ist.
Des Weiteren verfügt die Spulvorrichtung 24 über eine Fadenchangiereinrichtung 28 sowie über eine Spulenantriebswalze 26.

Die Fadenchangiereinrichtung 28 ist im Ausführungsbeispiel als Fingerfadenführer 29 ausgebildet, dessen Antrieb die Bezugszahl 31 trägt.
Eine solche Fadenchangiereinrichtung ist bekannt und beispielsweise in der DE 198 58 548.9 ausführlich beschrieben.

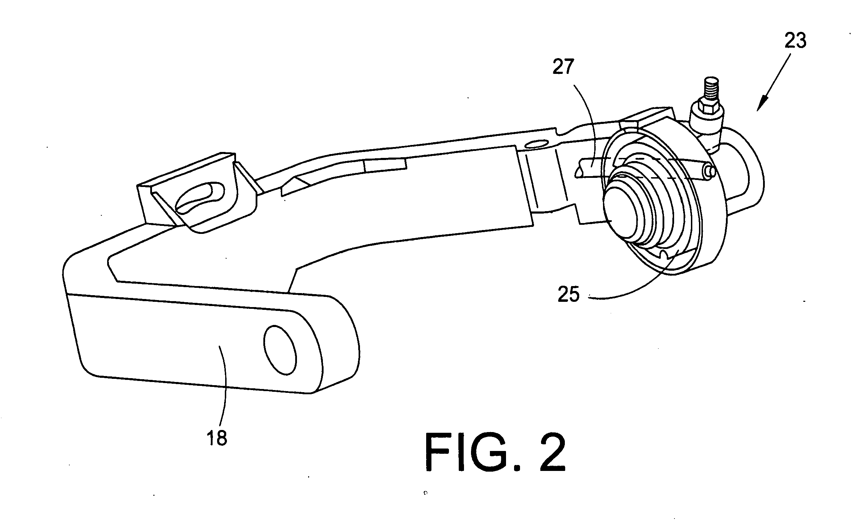

Die Figur 2 zeigt den Spulenrahmen 18 mit einer in einen der Spulenrahmenarme integrierten, erfindungsgemäßen Spulenbremse 23.
Die Spulenbremse 23 ist dabei über einen Pneumatikanschluss 27 definiert mit Druckluft beaufschlagbar und sorgt bei Bedarf dafür, dass der rotierbar gelagerte Hülsenaufnahmeteller 25, der in die Hülse der Kreuzspule 11 fasst, in den Stillstand abgebremst wird.

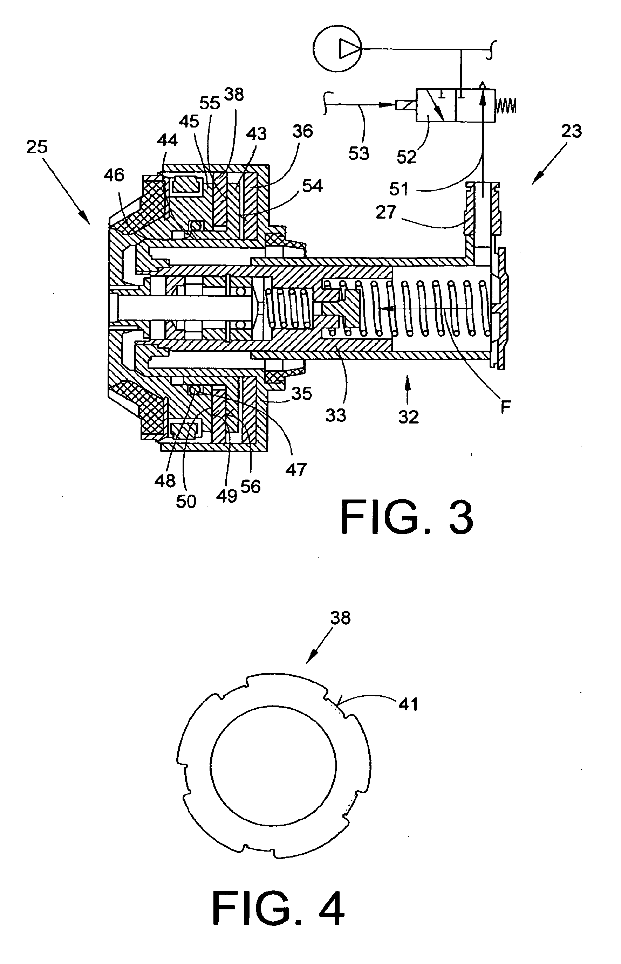

Der genaue konstruktive Aufbau der erfindungsgemäßen Spulenbremse 23 ist in den Figuren 3 und 4 dargestellt.

Wie insbesondere aus Figur 3 ersichtlich, weist die Spulenbremse 23 ein am Spulenrahmen 18 festgelegtes, pneumatisch beaufschlagbares Schubkolbengetriebe 32 auf, an dessen Kolben 33 ein Bremsgehäuse 35 befestigt ist, das axial verschiebbar, jedoch drehfest am Spulenrahmen 18 gelagert ist.

An der Rückwand des Bremsgehäuses 35 ist von innen ein Bremsbelag 36 befestigt, der vorzugsweise aus einem Kunststoffmaterial gefertigt ist, das sich durch einen hohen Reibwert auszeichnet und außerdem recht abriebfest ist.
Der Bremsbelag 36 kann allerdings auch als eine Bremskomponente ausgebildet sein, die einstückig aus Kunststoffmaterial gefertigt und über eine Außenverzahnung oder dgl. drehfest am Bremsgehäuses 35 festgelegt ist.
Am Bremsgehäuse 35 ist des Weiteren drehfest, jedoch axial verschiebbar ein Bremsring 38 angeordnet.

Die Bremsseiten 50 und 56 des Bremsringes 38 weisen dabei vorzugsweise jeweils einen Belag auf, der, wie der Bremsbelag 36, aus einem Kunststoffmaterial gefertigt ist, das sich durch einen guten Reibwert und eine hohe Abriebfestigkeit auszeichnet. Der Bremsring 38 verfügt auf seinem Außenumfang über eine Verzahnung 41, die mit einer entsprechenden Innenverzahnung des Bremsgehäuses 35 korrespondiert (Fig. 4).
In einer alternativen Ausführungsform kann der Bremsring 38 jedoch auch vollständig aus dem entsprechenden Kunststoffmaterial gefertigt und über eine entsprechende Verzahnung drehfest, jedoch axial verschiebbar an einer Verzahnung des Bremsgehäuses 35 angeordnet sein.
Zwischen dem Bremsbelag 36 und dem Bremsring 38 ist eine so genannte Bremsscheibe 43 positioniert, die mit einem Lageransatz 44 an einer Gleit- und Führungsfläche 46 eines Aufnahmegehäuses 45 des Hülsenaufnahmetellers 25 drehfest aber axial verschiebbar geführt ist.
Die Bremsscheibe 43 weist dabei Reibflächen 54, 55 auf, die mit dem Bremsbelag 36 bzw. mit der Bremsfläche 56 des Bremsringes 38 korrespondieren.

In die Gleit- und Führungsfläche 46 des Aufnahmegehäuses 45 ist eine Ringnut 47 eingearbeitet, in der ein O-Ring 48 gelagert ist.
Des Weiteren weist das Aufnahmegehäuse 45 endseitig Reibfläche 49 auf, an der während des Bremsvorganges der Bremsring 38 mit der Bremsfläche 50 anliegt.

### Funktion der Einrichtung:

Wenn an einer der Arbeitsstellen 2 des Kreuzspulautomaten 1 eine Kreuzspule 11 ihren vorgegebenen Durchmesser oder ihre vorgegebene Fadenlänge erreicht hat, wird über die Fadenschneideinrichtung 17 zunächst der Faden 30 getrennt und die Kreuzspule 11 durch eine (nicht dargestellte) Spulenrahmen-Abhebeeinrichtung von der Spulenantriebswalze 26 abgehoben.
Anschließend werden die Spulenantriebswalze 26 und die Kreuzspule 11 in den Stillstand abgebremst.
Zum Abbremsen der Kreuzspule 11 wird dabei ein in eine Pneumatikleitung 51 eingeschaltetes Wegeventil 52, das über eine Steuerleitung 53 mit dem Arbeitsstellenrechner 39 verbunden ist, im Sinne "Öffnen" angesteuert.
Die über den Pneumatikanschluss 27 in das Schubkolbengetriebe 32 einströmende Druckluft beaufschlagt den Kolben 33 des Schubkolbengetriebes 32 und schiebt ihn in Richtung des Pfeils F.
Der innen an der Rückwand des Bremsgehäuses 35 angeordnete Bremsbelag 36 wird dabei gegen die Reibfläche 54 der über das Aufnahmegehäuse 45 des Hülsenaufnahmetellers 25 indirekt mit der Kreuzspule 11 verbundenen und mit dieser rotierenden Bremsscheibe 43 gedrückt, die dadurch ihrerseits mit ihrer Reibfläche 55 an die Bremsfläche 56 des Bremsringes 38 angelegt wird.
Der axial verschiebbar, jedoch drehfest im Bremsgehäuse 35 gelagerte Bremsring 38 wird dabei mit seiner Bremsfläche 50 gegen die Reibfläche 49 des rotierenden Aufnahmegehäuses 45 gedrückt.
Das heißt, bei einer Druckluftbeaufschlagung des Schubkolbengetriebes 32 werden über die Bremsscheibe 43 sowie den Bremsring 38 drei rotierende Reibflächen 54, 55, 49, die direkt oder indirekt mit der rotierenden Kreuzspule 11 verbunden sind, mit drei Bremsflächen 36, 50, 56, die drehfest mit dem Bremsgehäuse 35 verbunden sind, in reibschlüssigen Kontakt gebracht.

Die Reibpartner 36, 54; 45, 56; 49, 50 sorgen dabei für eine wirkungsvolle Verzögerung der Kreuzspule 11 in den Stillstand.

Wenn die Spulenbremse 23 abgeschaltet wird, das heißt, wenn das Schubkolbengetriebe 32 durch das Wegeventil 52 drucklos geschaltet wird, sorgt der in der Ringnut 47 des Bremsringes 45 angeordnete O-Ring 48, der beim Bremsen durch den Führungsansatz 44 der Bremsscheibe 43 etwas verformt wird, dafür, dass die Bremsscheibe 43 wieder in ihre Ausgangslage zurückkehrt, in der die verschiedenen Reibpartner wieder weitestgehend außer Kontakt miteinander sind.

## Patentansprüche

1. Spulenbremse (23) für eine Spulvorrichtung (24) einer Kreuzspulen herstellenden Textilmaschine (1) mit einem rotierbar gelagerten Hülsenaufnahmeteller (25), der mit einer rückseitigen Bremsfläche (49) versehen ist, einem axial verschiebbar gelagerten, mit einem Bremsbelag (36) ausgerüsteten Bremsgehäuse (35) sowie einer Einrichtung (32) zum Verfahren des Bremsgehäuses (35) in eine Bremsstellung, wobei das Bremsgehäuse (35) auf den Hülsenaufnahmeteller (25) zu bewegt wird,
**dadurch gekennzeichnet,**
**dass** das Bremsgehäuse (35) zusätzlich zu dem am Bremsgehäuse (35) fest angeordneten Bremsbelag (36) einen mit dem Bremsgehäuse (35) drehfest verbundenen, jedoch bezüglich des Bremsgehäuses (35) axial verschiebbar gelagerten Bremsring (38) aufweist,
**dass** zwischen dem Bremsbelag (36) und dem Bremsring (38) eine muffenartige Bremsscheibe (43) installiert ist, die drehfest, jedoch axial verschiebbar in einem rotierbar gelagerten Aufnahmegehäuse (45) des Hülsenaufnahmetellers (25) angeordnet ist, das über eine endseitig angeordnete Bremsfläche (49) verfügt.

2. Spulenbremse nach Anspruch 1, **dadurch gekennzeichnet, dass** die Bremsscheibe (43) drehfest mit dem rotierbaren Aufnahmegehäuse (45) des Hülsenaufnahmetellers (25) verbunden ist und in Bremsstellung der Spulenbremse (23) zwischen dem Bremsbelag (36) und dem Bremsring (38) geklemmt ist.

3. Spulenbremse nach Anspruch 2, **dadurch gekennzeichnet, dass** das Aufnahmegehäuse (45) topfartig ausgebildet ist und eine nach innen weisende Gleit- und Führungsfläche (46) für die Bremsscheibe (43) aufweist, wobei in die Führungsfläche (46) eine Ringnut (47) zur Aufnahme eines O-Ringes (48) eingearbeitet ist.

4. Spulenbremse nach Anspruch 1, **dadurch gekennzeichnet, dass** der axial verschiebbar gelagerte Bremsring (38) eine Außenverzahnung (41) aufweist, die mit einer entsprechenden Innenverzahnung am Bremsgehäuse (35) korrespondiert.

## Claims

1. Bobbin brake (23) for a winding device (24) of a textile machine (1) for producing cross-wound bobbins with a rotatably mounted tube receiving plate (25), which is provided with a rear brake face (49), an axially displaceably mounted brake housing (35) equipped with a brake lining (36), and a mechanism (32) for moving the brake housing (35) into a braking position, the brake housing (35) being moved toward the tube receiving plate (25),
**characterised in that**
the brake housing (35), in addition to the brake lining (36) securely arranged on the brake housing (35), comprises a brake ring (38) which is non-rotatably connected to the brake housing (35), but axially displaceably mounted with respect to the brake housing (35),
**in that** a sleeve-like brake disc (43) is installed between the brake lining (36) and the brake ring (38) and is arranged non-rotatably, but axially displaceably in a rotatably mounted receiving housing (45) of the tube receiving plate (25), which has a brake face (49) arranged at the end.

2. Bobbin brake according to claim 1, **characterised in that** the brake disc (43) is connected non-rotatably to the rotatable receiving housing (45) of the tube receiving plate (25) and is clamped between the brake lining (36) and the brake ring (38) in the braking position of the bobbin brake (23).

3. Bobbin brake according to claim 2, **characterised in that** the receiving housing (45) is pot-shaped and has an inwardly pointing slide and guiding face (46) for the brake disc (43), an annular groove (47) for receiving an O-ring (48) being incorporated into the guide face (46).

4. Bobbin brake according to claim 1, **characterised in that** the axially displaceably mounted brake ring (38) has an outer tooth system (41), which corresponds with a corresponding inner tooth system on the brake housing (35).

## Revendications

1. Frein (23) de bobines, destiné à un dispositif de bobinage (24) d'une machine textile (1) produisant des bobines croisées, comprenant un plateau (25) receveur de bobines, monté à rotation et pourvu d'une surface postérieure de freinage (49) ; un carter (35) monté à coulissements axiaux et équipé d'une garniture de freinage (36) ; ainsi qu'un système (32) de déplacement dudit carter (35) du frein vers une position de freinage, ledit carter (35) étant alors mû en direction dudit plateau (25) receveur de bobines,
**caractérisé**
**par le fait que** le carter (35) dudit frein comporte, en plus de la garniture de freinage (36) occupant une position fixe sur ledit carter (35), une bague de freinage (38) verrouillée en rotation avec ledit carter (35), toutefois montée avec faculté de coulissements axiaux vis-à-vis dudit carter (35) ; et
par l'interposition, entre la garniture de freinage (36) et la bague de freinage (38), d'un disque de freinage (43) du type fourreau qui est verrouillé en rotation, mais peut cependant coulisser axialement dans un boîtier-réceptacle (45) du plateau (25) receveur de bobines, monté rotatif et doté d'une surface de freinage (49) occupant une position extrême.

2. Frein de bobines, selon la revendication 1, **caractérisé par le fait que** le disque de freinage (43) est verrouillé en rotation avec le boîtier-réceptacle rotatif (45) du plateau (25) receveur de bobines, et est coincé entre la garniture de freinage (36) et la bague de freinage (38) en position de freinage dudit frein (23) de bobines.

3. Frein de bobines, selon la revendication 2, **caractérisé par le fait que** le boîtier-réceptacle (45) est réalisé en forme de pot et offre une surface (46) de glissement et de guidage, pointant vers l'intérieur et associée au disque de freinage (43), une rainure annulaire (47) étant pratiquée dans ladite surface de guidage (46), en vue de recevoir une bague torique (48).

4. Frein de bobines, selon la revendication 1, **caractérisé par le fait que** la bague de freinage (38), montée à coulissements axiaux, présente une denture extérieure (41) complémentaire d'une denture intérieure correspondante, située sur le carter (35) dudit frein.
